Europäisches Patentamt

European Patent Office

Office européen des brevets

(11) Publication number: **0 047 050**
**B1**

**EUROPEAN PATENT SPECIFICATION**

(45) Date of publication of patent specification: **09.01.85**

(51) Int. Cl.⁴: **C 08 L 25/16, C 08 F 257/02, C 08 J 7/18**

(21) Application number: **81302681.2**

(22) Date of filing: **16.06.81**

(54) **Radiation cross-linked articles of poly(p-methylstyrene) blends and method for making them.**

(30) Priority: **02.09.80 US 183600**

(43) Date of publication of application:
**10.03.82 Bulletin 82/10**

(45) Publication of the grant of the patent:
**09.01.85 Bulletin 85/02**

(84) Designated Contracting States:
**BE DE FR GB IT NL**

(56) References cited:
**EP-A-0 013 073**
**FR-A-2 365 598**
**US-A-4 205 114**

(73) Proprietor: **MOBIL OIL CORPORATION**
**150 East 42nd Street**
**New York New York 10017 (US)**

(72) Inventor: **Robertson, Arthur Bruce**
**597-2 Auten Road**
**Hillsborough New Jersey (US)**

(74) Representative: **West, Alan Harry et al**
**Mobil Court 3 Clements Inn**
**London WC2A 2EB (GB)**

Courier Press, Leamington Spa, England.

## Description

This invention is directed to shaped articles of poly-(p-methylstyrene) blends which can be cross-linked by ionizing radiation at low dosage levels.

U.S. Patent 4,205,114 describes shaped articles of poly-(p-methylstyrene), that are cross-linked by ionizing radiation to render such articles resistant to fatty foods under microwave oven conditions. The amount of radiation required to cross-link poly(p-methylstyrene), however, is between about 50 megarads and about 60 megarads, and is too high to be commercially feasible.

There is therefore a need for a poly(p-methylstyrene)-based material which can be cross-linked at lower radiation dosage levels.

The present invention is based on the observation that lower doses of radiation are sufficient to effect cross-linking when the poly(p-methylstyrene) has been blended with a small amount of triallyl cyanurate or triallyl isocyanurate.

The present invention accordingly provides a shaped article comprising a blend of poly(p-methylstyrene) and either triallyl cyanurate or triallyl isocyanurate which has been formed and irradiated with ionizing radiation to effect sufficient cross-linking to render the shaped article resistant to fatty foods under microwave oven conditions.

The present invention also provides a method of making a shaped article that is resistant to fatty foods under microwave conditions, which comprises blending together poly(p-methylstyrene) and from 0.1 percent to 10 percent of triallyl cyanurate or triallyl isocyanurate, forming the blend into a shaped article, and irradiating the shaped article with ionizing radiation to effect sufficient cross-linking to render the shaped article resistant to fatty foods under microwave oven conditions.

The term "poly(p-methylstyrene)" is used herein to include not only homopolymers of p-methylstyrene but also polymers of methylstyrene isomer mixtures rich in p-methylstyrene and copolymers of p-methylstyrene or p-methylstyrene-rich isomer mixtures and from about 1 to about 10 weight percent of conjugated diene, for example butadiene and isoprene.

Mixtures of methylstyrene isomers rich in p-methylstyrene generally contain at least about 90 weight percent, preferably at least about 95 weight percent, p-methylstyrene and less than 0.1 weight percent o-methylstyrene, the balance being m-methylstyrene. For example, a typical mixture contains, by weight, about 95 percent p-methylstyrene, about 5 percent m-methylstyrene, and about 0.05 percent o-methylstyrene. Such mixtures may be obtained by catalytic dehydrogenation of mixtures of ethylmethylbenzene isomers described in U.S. Patent 4,086,287.

The polymerization to produce such polymers may be carried out using methods and catalysts which are conventional for polymerizing styrene. The reaction may be carried out in solution, bulk, suspension, or emulsion.

In accordance with this invention, the material that is blended with the poly(p-methylstyrene) is triallyl cyanurate or triallyl isocyanurate, small amounts of these materials being effective to induce cross-linking by radiation at low dosage level. Generally, from 0.1 weight percent to 10 weight percent, preferably from 0.5 weight percent to 5 weight percent, will be used. Blending can be effected in a variety of ways, for example in solution in an aromatic solvent, such as toluene, from which sheets or films can be cast. Alternatively, the blend components can be mixed in a tumbling agitator and fed into an extruder to produce sheets, films, or foamed sheets, or they can be fed separately to an extruder for extruder blending.

The blends can be injection molded directly to shaped articles, or can be formed into sheets, films, or foamed sheets and then thermoformed to produce shaped articles, such as food containers. After being irradiated, such shaped articles are heat resistant and are not affected by fatty foods under microwave oven conditions.

Examples of such sheets, films and foamed sheets include foamed poly(p-methylstyrene) blend sheets, biaxially-oriented poly(p-methylstyrene) blend sheets, biaxially-oriented poly(p-methylstyrene) blend films laminated with biaxially-oriented foamed poly(p-methylstyrene) blend sheets, and biaxially-oriented poly(p-methylstyrene) blend films laminated with foamed polystyrene sheets.

The manner by which foamed sheets are prepared is generally immaterial. General methods of forming foamed sheets are discussed in U.S. Patent 3,444,283, for example. The preferred method, however, is a direct injection extrusion operation as described in U.S. Patent 3,444,283 and U.S. Patent 3,619,445 which describes the complete direct injection extrusion foam lines. As described in these patents, nucleating or cell size control agents can be used.

Poly(p-methylstyrene) blend sheets can be produced by any known technique for making oriented polystyrene sheet or film. A preferred method is described in U.S. Patent 3,682,730.

Laminates of poly(p-methylstyrene) blend films with foamed polystyrene or poly(p-methylstyrene) sheet may be prepared as described in U.S. Patent 3,682,730, mentioned above. Either foamed polystyrene sheet or foamed poly(p-methylstyrene) sheet can be used, so long as the film laminated thereto is poly(p-methylstyrene) blend.

Processes of thermoforming to produce shaped articles are well known in the art. A generally preferred method of thermoforming is vacuum forming. The shaped articles produced by thermoforming poly(p-methylstyrene) blend can vary widely. Typical shapes that are utilizable include for example, trays, tubs, bowls and cups. Such shaped articles are adaptable for packaging foods and, when made from poly(p-methylstyrene) blend and irradiated in accordance with this invention, are adaptable for packaging foods containing fats.

The ionizing radiation which may be used includes extremely short-wave length, highly energetic, penetrating rays such as gamma rays, X-rays, and subatomic particles accelerated in cyclotrons, betatrons, synchrotrons, and linear accelerators. The effect of irradiating the shaped articles is to cross-link the poly(p-methylstyrene) blend. The radiation dose can be from about 5 megarads to about 30 megarads. Poly(p-methylstyrene) requires between 50 megarads and 60 megarads for cross-linking, and similar blends using polystyrene are not cross-linked at low dosages.

The following Examples illustrate the invention.

Examples 1—6

A series of blends of poly(p-methylstyrene) (PPMS) with varying amounts of triallyl cyanurate or triallyl isocyanurate was prepared by melt blending in a Brabender mixer at 200°C for 5 minutes. Each blend was dissolved in methylene chloride (25 weight % solution) and cast with a Gardner film applicator onto a polyethylene terephthalate sheet. The solvent was evaporated at 60°C in a vacuum oven to yield films of 0.075 to 0.1 mm thickness. The films were irradiated with an electron beam at dosages of 5, 10 and 30 megarads. The weight percent of cross-linking was determined by measuring solubility of irradiated films in toluene at room temperature. Insoluble gel found was filtered and dried to constant weight at 150°C. Pertinent data and results are set out in the following Table.

TABLE

| Example | Blend: PPMS+ | 5 megarads | 10 megarads | 30 megarads |
|---|---|---|---|---|
| 1 | 1% Triallyl cyanurate | 11.1 | 13.4 | 68.1 |
| 2 | 2% Triallyl cyanurate | 5.3 | 53.4 | 71.8 |
| 3 | 1% Triallyl isocyanurate | 7.2 | 8.7 | 69.5 |
| 4 | 2% Triallyl isocyanurate | 2.5 | 65.3 | 80.0 |
| 5 | 5% Triallyl isocyanurate | 15.3 | 20.0 | 100.0 |
| 6 | 10% Triallyl isocyanurate | 16.8 | 63.0 | 99.9 |

## Claims

1. A shaped article comprising a blend of poly(p-methylstyrene) and either triallyl cyanurate or triallyl isocyanurate which has been formed and irradiated with ionizing radiation to effect sufficient cross-linking to render the shaped article resistant to fatty foods under microwave oven conditions.

2. A shaped article according to Claim 1, wherein the amount of ionizing radiation is between 5 megarads and 30 megarads.

3. A shaped article according to Claim 1 or Claim 2, wherein the blend contains from 0.1 percent to 10 percent of triallyl cyanurate or triallyl isocyanurate.

4. A shaped article according to Claim 3, wherein the blend contains from 0.5 percent to 5 percent of triallyl cyanurate or triallyl isocyanurate.

5. A method for making a shaped article that is resistant to fatty foods under microwave oven conditions, which comprises

blending together poly(p-methylstyrene) and from 0.1 percent to 10 percent of triallyl cyanurate or triallyl isocyanurate;

forming the blend into a shaped article; and

irradiating the shaped article with ionizing radiation to effect sufficient cross-linking to render the shaped article resistant to fatty foods under microwave oven conditions.

6. A method according to Claim 5, wherein the amount of ionizing radiation is from 5 megarads to 30 megarads.

7. A method according to Claim 5 or Claim 6, wherein the blend contains from 0.5 percent to 5 percent of triallyl cyanurate or triallyl isocyanurate.

8. A method according to any one of Claims 5 to 7, wherein the blend is formed into a shaped article by injection molding.

9. A method according to any one of Claims 5 to 7, wherein the blend is formed into a shaped article firstly by forming it into a foamed or unfoamed sheet and secondly by thermoforming the sheet into a shaped article.

## Patentansprüche

1. Geformter Gegenstand, der eine Mischung aus Poly(p-methylstyrol) und entweder Triallylcyanurat oder Triallylisocyanurat enthält, die verformt wurde und mit einer ionisierenden Strahlung bestrahlt wurde, um eine ausreichende Vernetzung zu bewirken, um den geformten Gegenstand gegen fette Speisen unter den Bedingungen eines Mikrowellenofens beständig zu machen.

2. Geformter Gegenstand nach Anspruch 1, bei dem die Menge der ionisierenden Strahlung zwischen 5 Megarad und 30 Megarad liegt.

3. Geformter Gegenstand nach Anspruch 1 oder Anspruch 2, bei dem die Mischung von 0,1% bis 10% Triallylcyanurat oder Triallylisocyanurat enthält.

4. Geformter Gegenstand nach Anspruch 3, bei dem die Mischung von 0,5% bis 5% Triallylcyanurat oder Triallylisocyanurat enthält.

5. Verfahren zur Herstellung eines geformten Gegenstandes, der gegenüber fetten Speisen unter den Bedingungen eines Mikrowellenofens beständig ist, das umfaßt.

Vermischen von Poly(p-methylstyrol) mit von 0,1% bis 10% Triallylcyanurat oder Triallylisocyanurat;

Verformen der Mischung zu einem geformten Gegenstand und

Bestrahlen des geformten Gegenstands mit einer ionisierenden Strahlung, um eine ausreichende Vernetzung zu bewirken, um den geformten Gegenstand gegenüber fetten Speisen unter den Bedingungen eines Mirkowellenofens beständig zu machen.

6. Verfahren nach Anspruch 5, bei dem die Menge der ionisierenden Strahlung von 5 Megarad bis 30 Megarad beträgt.

7. Verfahren nach Anspruch 5 oder Anspruch 6, bei dem die Mischung von 0,5% bis 5% Triallylcyanurat oder Triallylisocyanurat enthält.

8. Verfahren nach einem beliebigen der Ansprüche 5 bis 7, bei dem die Mischung durch Spritzgießen zu einem geformten Gegenstand verformt wird.

9. Verfahren nach einem beliebigen der Ansprüche 5 bis 7, bei dem die Mischung dadurch zu einem geformten Gegenstand verformt wird, daß sie zuerst zu einem geschäumten oder nicht-geschäumten Blatt verformt wird und anschließend das Blatt durch Warmformen zu einem geformten Gegenstand verformt wird.

**Revendications**

1. Article façonné comprenant un mélange de poly(p-méthylstyrène) et de cyanurate de triallyle ou d'isocyanurate de triallyle, qui a été formé et irradié par un rayonnement ionisant pour effectuer suffisamment de réticulation pour rendre l'article façonné résistant à des aliments gras dans les conditions de séjour dans un four à micro-ondes.

2. Article façonné selon la revendication 1, dans lequel la quantité de rayonnements ionisants se situe entre 5 Mrd et 30 Mrd.

3. Article façonné selon la revendication 1 ou la revendication 2, dans lequel le mélange contient 0,1% à 10% de cyanurate de triallyle ou d'isocyanurate de triallyle.

4. Article façonné selon la revendication 3, dans lequel le mélange contient de 0,5% à 5% de cyanurate de triallyle ou d'isocyanurate de triallyle.

5. Procédé pour fabriquer un article façonné qui résiste à des aliments gras dans des conditions de séjour dans un four à micro-ondes, qui comprend

le mélangeage du poly(p-méthylstyrène) et de 0,1% à 10% de cyanurate de triallyle ou d'isocyanurate de triallyle;

la mise du mélange en forme d'un article façonné; et

l'irradiation de l'article façonné par un rayonnement ionisant pour effectuer suffisamment de réticulation pour rendre l'article façonné résistant à des aliments gras dans des conditions de séjour dans un four à micro-ondes.

6. Procédé selon la revendication 1, dans lequel le rayonnement ionisant se situe entre 5 Mrd et 30 Mrd.

7. Procédé selon la revendication 5 ou la revendication 6, dans lequel le mélange contient de 0,5% à 5% de cyanurate de triallyle ou d'isocyanurate de triallyle.

8. Procédé selon l'une quelconque des revendications 5 à 7, dans lequel le mélange est mis sous forme d'un article façonné par moulage par injection.

9. Procédé selon l'une quelconque des revendications 5 à 7, dans lequel le mélange est mis sous forme d'un article façonné tout d'abord par formage en une feuille de mousse ou n'ayant pas moussé puis par thermoformage de la feuille en un article façonné.